# EUROPÄISCHE PATENTANMELDUNG

(11) **EP 1 629 959 A2**
(43) Veröffentlichungstag der Anmeldung: **01.03.2006**
(21) Anmeldenummer: 05450121.8
(22) Anmeldetag: 18.07.2005
(51) Int. Cl.: B29C 47/90

(54) **Kühlvorrichtung für Strangpresseprofile**

(30) Priorität: 26.08.2004 AT 14412004
(71) Anmelder: Trinity Technology GmbH, 4052 Ansfelden (AT)
(72) Erfinder: Kögler, Siegfried, 4541 Bad Hall (AT)
(74) Vertreter: Hehenberger, Reinhard

(57) **Zusammenfassung**

Eine Kühlvorrichtung für stranggepresste Kunststoffprofile weist einen Kühlraum (1) mit Kühlwasser auf, durch welches das zu kühlende Kunststoffprofil durchgeführt wird. Der Kühlraum (1) weist des weiteren wenigstens eine Zuleitung (10, 11) für das Kühlwasser im Boden (4) oder in einer Seitenwand (2, 3) auf. An wenigstens einer Seitenwand (2) ist eine Überströmkante (8) für das Kühlwasser angeordnet. Durch die Höhe der Überströmkante (8) kann die Höhe des Wasserspiegels (16) druckunabhängig eingestellt werden.

## Beschreibung

Die Erfindung betrifft eine Kühlvorrichtung für stranggepresste Kunststoffprofile mit einem Kühlraum mit Kühlwasser, durch welches das zu kühlenden Kunststoffprofil durchgeführt wird, wobei der Kühlraum einen Boden, Stirnwände und Seitenwände sowie wenigstens eine Zuleitung für das Kühlwasser im Boden oder in einer Seitenwand aufweist.

Beim Herstellen von Kunststoffprofilen, beispielsweise Profilen für Fensterrahmen aus PVC, wird das Kunststoffmaterial am Ende des Extruders durch eine Profildüse gepresst und muss anschließend maßhaltig abgekühlt werden. Im Zuge dieser Abkühlung werden u.a. Kühlvorrichtungen verwendet, bei denen das stranggepresste Kunststoffprofil durch einen mit Kühlwasser gefüllten Kühlraum geführt wird. Im Stand der Technik gibt es dabei Kühlräume, die entweder vollständig oder nur teilweise mit Kühlwasser gefüllt sind. Zugeführt wird das Kühlwasser entweder über eine einlaufseitig angebrachte Zuleitung oder über mehrere, über die Länge des Kühlraumes verteilte Zuleitungen. Das Kühlwasser durchströmt dann den Kühlraum und wird am auslaufseitigen Ende des Kühlraumes über einen Ablauf abgeleitet.

Problematisch bei Kühlvorrichtungen der eingangs Gattung ist es, eine hohe Kühlleistung zu erzielen, die anderseits aber auch auf einen unterschiedlichen Kühlbedarf über die Länge der Kühlstrecke sowie auf unterschiedliche Profilformen Rücksicht nimmt, bzw. darauf eingestellt werden kann.

Gelöst wird dieses Problem mit einer Kühlvorrichtung mit den Merkmalen des Anspruches 1.

Bei der Erfindung erfolgt die Ableitung des Kühlwassers nicht am Ende des Kühlraumes bzw. der Kühlstrecke, sondern mittels einer Überströmkante in wenigstens einer Seitenwand.

Dies eröffnet mehrere Möglichkeiten. Zum einen kann bei Bedarf eine Strömungskomponente quer zum Kunststoffprofil erzeugt werden, was insbesondere dann besonders gut durchführbar ist, wenn zwei oder mehr Zuleitungen für das Kühlwasser über die Länge des Kühlraumes verteilt sind.
Zum anderen kann die Höhe der Überströmkante über dem Boden über die gesamte Länge des Kühlraumes konstant, aber auch variabel sein. Auf diese Weise kann die Höhe des Wasserspiegels am Ende der Kühlstrecke, z.B. höher oder niedriger sein als am Beginn der Kühlstrecke, wodurch es z.B. möglich wird, gewisse Teile des zu kühlenden Kunststoffprofils am Beginn oder am Ende aus dem Wasser herausragen zu lassen, wenn diese Abschnitte weniger stark oder weniger lang gekühlt werden sollen.

In einer alternativen Ausführungsform der Erfindung kann vorgesehen sein, dass die Höhe der Überströmkante über dem Boden verstellbar ist. Dies ermöglicht eine sehr einfache Anpassbarkeit der Höhe des Wasserspiegels an unterschiedliche Profilformen.

In dieser sehr einfachen Ausführungsform der Erfindung wird die Überströmkante von der Oberkante der Seitenwand gebildet.

In einer alternativen Ausführungsform wird die Überströmkante von wenigstens einer, vorzugsweise mehreren über die Länge des Kühlraumes verteilte Öffnungen in der Seitenwand gebildet. Dabei kann die Höhe einzelner oder aller Öffnungen über dem Boden unterschiedlich einstellbar sein.

Bei der Erfindung kann eine einzige Zuleitung für das Kühlwasser vorgesehen sein. In einer bevorzugten Ausführungsform sind allerdings zwei oder mehr Zuleitungen für das Kühlwasser über die Länge des Kühlraumes verteilt. Dies ermöglicht eine bessere Einstellung des Kühlwasserstromes und somit des Kühleffektes an verschiedenen Abschnitten der Kühlstrecke.

Wie im Stand der Technik üblich kann im Kühlraum wenigstens eine Stützblende für das Kunststoffprofil angeordnet sein. Diese Stützblende kann abgesehen von der Öffnung für das Kunststoffprofil mit zusätzlichen Durchbrechungen ausgestattet sein, wodurch eine Durchströmung der Stützblende in Längsrichtung des Kühlraumes möglich wird.

Zum Abführen des Kühlwassers kann in einer bevorzugten Ausführungsform der Erfindung vorgesehen sein, dass auf der vom Kühlraum abgewandten Seite der Seitenwand ein Auffangraum mit wenigstens einem Ablauf für überströmendes Kühlwasser angeordnet ist. In diesem Auffangraum sammelt sich das aus dem Kühlraum über die Überströmkante fließende Wasser und kann von dort abgeführt werden.

Bei der Erfindung ist es dabei möglich, dass der Ablauf entweder in einer Außenwand des Auffangraumes oder im Boden des Auffangraumes angeordnet ist.

Beim Kühlen von Kunststoffhohlprofilen wird die gesamte Vorrichtung meist mit Unterdruck beaufschlagt, um zu verhindern, dass die Wände des noch plastisch verformbaren Kunststoffhohlprofils durch den Wasserdruck nach innen gedrückt werden. Es kann daher im Rahmen der Erfindung vorgesehen sein, dass sie ein den Kühlraum und gegebenenfalls Auffangraum umgebendes Gehäuse aufweist, an das eine Vakuumpumpe angeschlossen ist.

Dabei kommt ein weiterer wesentlicher Vorteil der Erfindung zu tragen. Durch Schwankungen des Unterdruckes in der Luft über der Kühlflüssigkeit, der im Wechselspiel zum Saugdruck steht, mit dem die Kühlflüssigkeit abgesaugt wird, kann es im Stand der Technik zu Schwankungen der Höhe des Flüssigkeitsspiegels der Kühlflüssigkeit kommen. Bei der Erfindung hingegen wird die Höhe des Flüssigkeitsspiegels durch die Höhe der Überströmkante bestimmt, so dass es durch Druckschwankungen nicht zu Schwankungen der Höhe des Flüssigkeitsspiegels kommen kann.

Schließlich kann im Rahmen der Erfindung vorgesehen sein, dass sie bezüglich einer vertikalen Längsmittelebene symmetrisch aufgebaut ist, d.h., dass Einrichtungen der Kühlvorrichtung, wie die mit einer gegebenenfalls höhenverstellbaren Überströmkante versehene Seitenwand, die Zuleitungen und Ableitungen für Kühlwasser sowie der Auffangraum beidseitig neben dem Kunststoffprofil angeordnet und im wesentlichen symmetrisch ausgeführt sind.

Weitere bevorzugte Ausführungsformen der Erfindung sind Gegenstand der übrigen Unteransprüche.

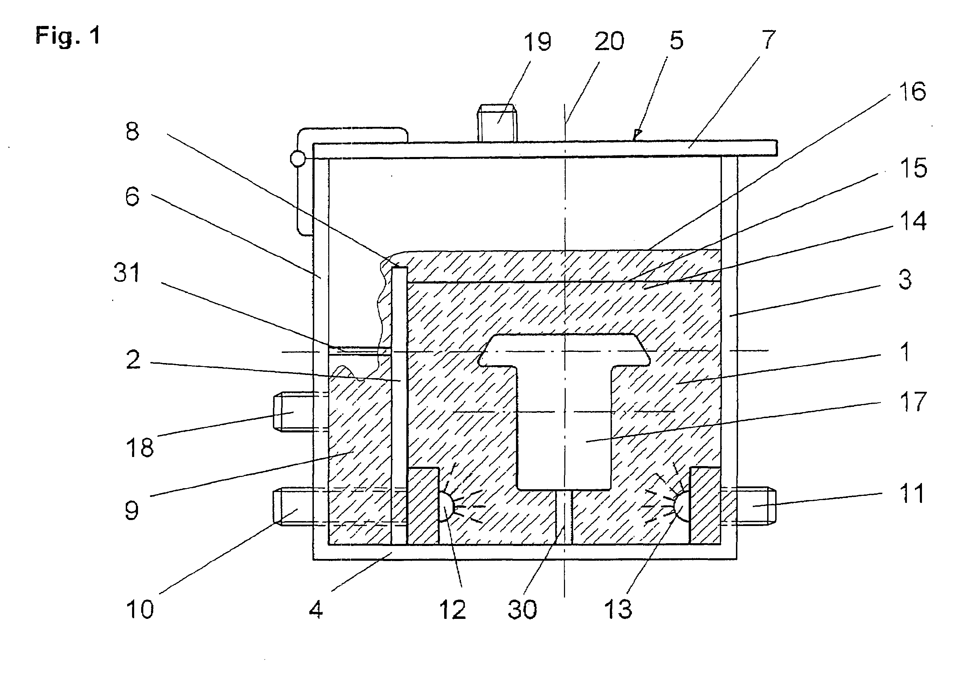

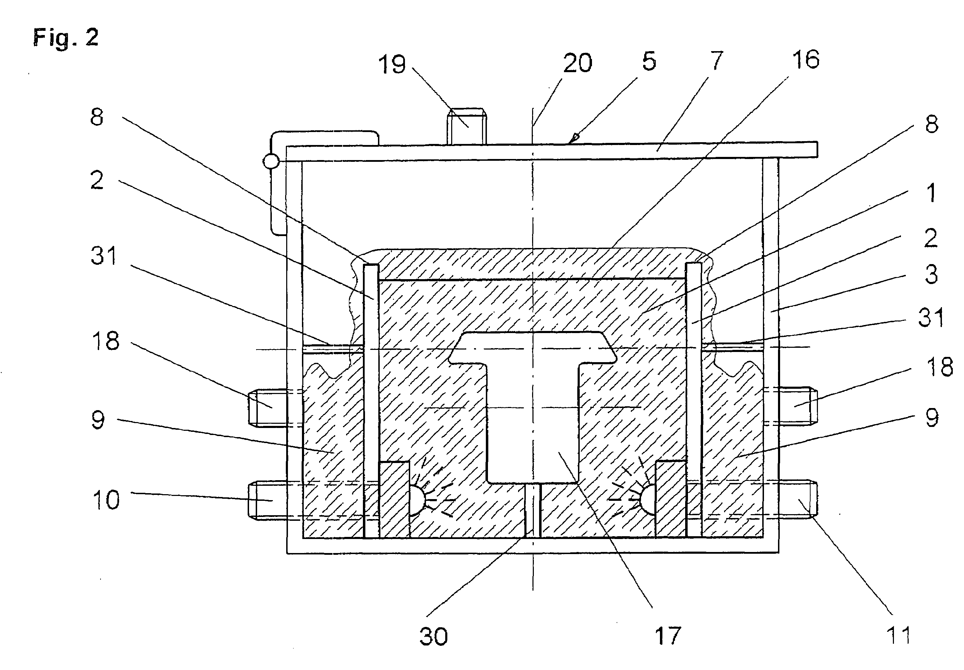

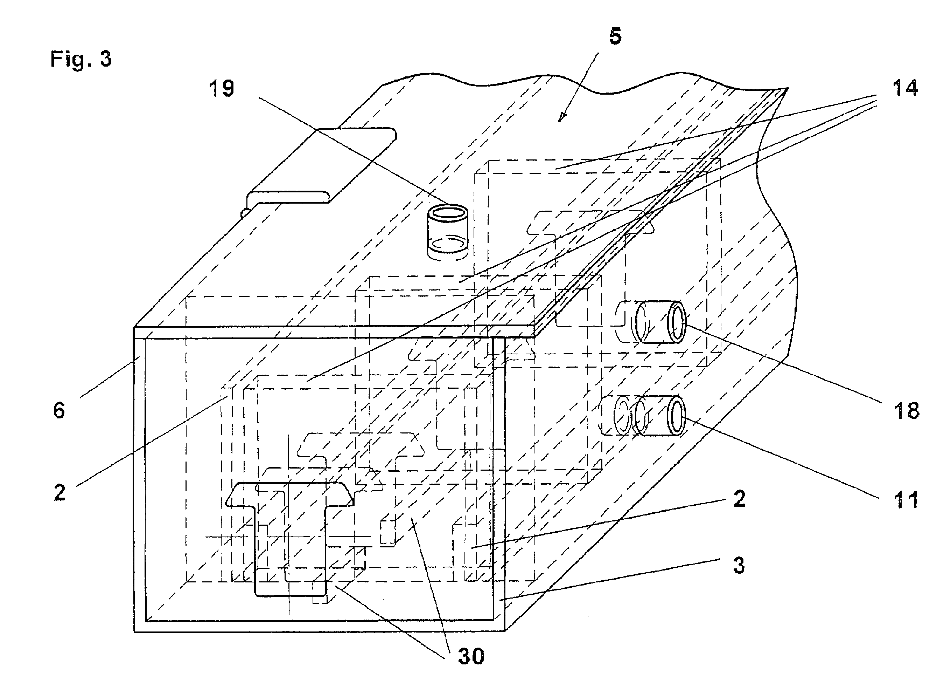

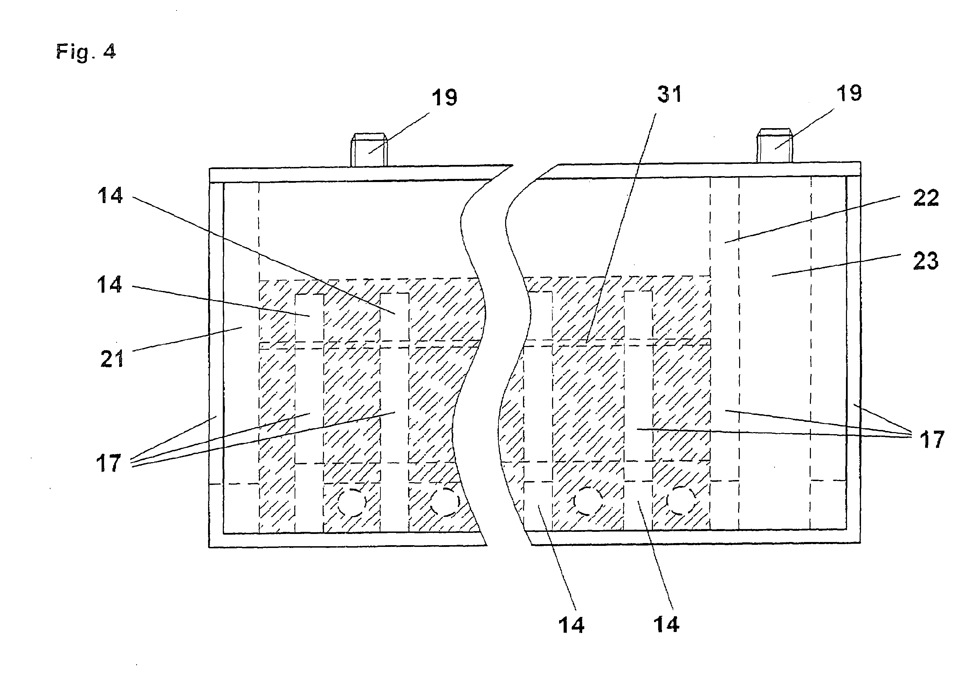

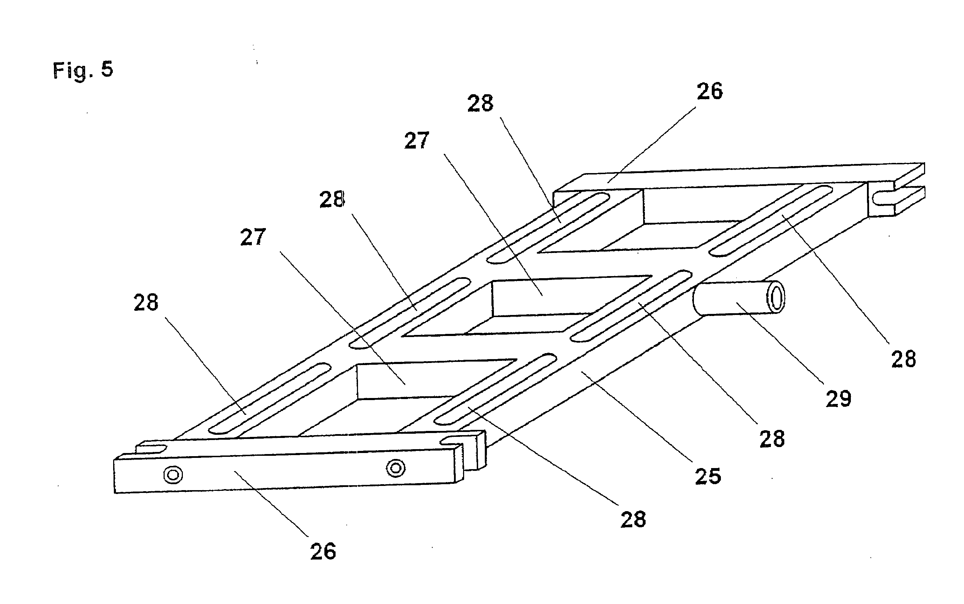

Weitere Merkmale und Vorteile der Erfindung ergeben sich aus der nachfolgenden Beschreibung von bevorzugten Ausführungsbeispielen der Erfindung unter Bezugnahme auf die beiliegenden Zeichnungen. Es zeigt: Fig. 1 eine erste Ausführungsform der Erfindung im Schnitt, Fig. 2 eine zweite Ausführungsform der erfindungsgemäßen Vorrichtung in symmetrischer Ausführung im Schnitt, Fig. 3 einen Teil der Ausführungsform von Fig. 2 in Schrägansicht, Fig. 4 eine Seitenansicht einer erfindungsgemäßen Vorrichtung und Fig. 5 eine Schrägansicht eines erfindungsgemäßen Montagerahmens für die Vorrichtung.

In Fig. 1 ist eine erste Ausführungsform einer erfindungsgemäßen Kühlvorrichtung dargestellt, mit der ein Kunststoffprofil mit z.B. T-förmigem Außenumriss gekühlt werden kann. Die Kühlvorrichtung besteht im wesentlichen aus einem Kühlraum 1, in dem sich eine Kühlflüssigkeit, in der Regel Wasser, befindet. Begrenzt wird der Kühlraum 1 durch Seitenwände 2, 3, einen Boden 4 sowie in Fig. 1 nicht dargestellte Stirnwände 21, 22 (Fig. 4). Umgeben wird die gesamte Kühlvorrichtung von einem Gehäuse 5, wobei die Seitenwand 3 gleichzeitig eine Außenwand des Gehäuses 5 bildet. Zusätzlich sind noch eine Außenwand 6 und ein Deckel 7 vorgesehen.

Wie Fig. 1 zeigt, bildet die Seitenwand 2 mit ihrem oberen Rand 8 eine Überströmkante für das Kühlwasser, über welche das Kühlwasser aus dem Kühlraum 1 in einen Auffangraum 9 strömt. Zugeführt wird das Kühlwasser über Zuleitungen 10 und 11, die über die Länge des Kühlraumes 1 verteilt in den Seitenwänden 2 und 3 angebracht sind. Die Zuläufe 7 und 11 münden in Düsen 12 und 13.

Im Kühlraum 1 befinden sich, wie Fig. 4 zeigt, mehrere Stützblenden 14, zwischen denen die Düsen 12 und 13 angeordnet sind. In den Blenden 14 befindet sich eine zentrale Öffnung 17, durch welche das zu kühlende Kunststoffprofil durchgeführt wird. Die Blenden können ansonsten vollflächig ausgeführt sein, d.h. den Kühlraum 1 in getrennte Abschnitte unterteilen, oder mit zusätzlichen Durchbrechungen, die in den Zeichnungen nicht dargestellt sind, ausgestattet sein, um eine Strömung des Kühlwassers in Längsrichtung des Kühlraumes 1 zu erlauben. Die Stützblenden 14 können des weiteren eine Oberkante 15 mit einer Höhe aufweisen, die geringer als die Höhe der Überströmkante 8 ist. Die Höhe der Oberkante 15 kann aber auch gleich oder höher als die Überströmkante 8 sein und somit über den Wasserspiegel 16 im Bereich des Kühlraumes 1 hinausragen, womit auch Teile der Profilierungsöffnung 17 bei Bedarf über den Wasserspiegel 16 hinausragen können. Dies kann von Vorteil sein, wenn Teile des zu kühlenden Strangpressprofils langsamer abgekühlt werden sollen als andere Teile, die sich im Bereich des Kühlwassers befinden. Außerdem lässt sich dadurch die Höhe des Wasserspiegels in unterschiedlichen Abschnitten auf einfache Weise unterschiedlich einstellen.

Wie Fig. 1 zeigt, wird die Höhe des Wasserspiegels 16 durch die Überströmkante 8 bestimmt, wobei das Wasser in einen zwischen der Seitenwand 2 und der Außenwand 6 gebildeten Auffangraum 9 strömt. Durch die Höhe der Überströmkante 8 kann somit die Höhe des Wasserspiegels im Kühlraum 1 eingestellt werden. Die Höhe der Überströmkante 8 kann dabei über die gesamte Länge des Kühlraumes 1 konstant sein, sie kann aber in unterschiedlichen Abschnitten auch eine unterschiedliche Höhe aufweisen, um durch eine unterschiedliche Höhe des Wasserspiegels die Abkühlungsgeschwindigkeit des Strangpressprofils in unterschiedlichen Abschnitten unterschiedlich einstellen zu können.

Bei Bedarf kann die Seitenwand 2 auch höhenverstellbar ausgeführt sein, um die Höhe des Wasserspiegels 16 bei Bedarf rasch und einfach verändern zu können. Dies kann beispielsweise durch eine zwei- oder mehrteilige, höhenverstellbare Seitenwand 2 oder durch einen Schieber, oder dergleichen an der Seitenwand 2 erfolgen.

Abgesaugt wird das Wasser aus dem Auffangraum 9 über eine oder mehrere Ablaufleitungen 18, wobei das Absaugen des Kühlwassers relativ problemlos erfolgen kann, da die Höhe des Wasserspiegels im Auffangraum 9 bzw. allfällige Quer- oder Längsströmungen in diesem Bereich ohne Einfluss auf die Höhe des Wasserspiegels im Kühlraum 1 und somit auf die Kühlung des Profils sind.

Da der Kühlraum 1 von einem geschlossenen Gehäuse 5 umgeben ist, kann dieses über einen Anschluss 19 mit Unterdruck beaufschlagt werden. Das Vakuum wirkt in der gesamten Kühlvorrichtung sehr gleichmäßig und ist variabel einstellbar, wobei der Wasserstand bzw. die Höhe des Wasserspiegels 16 im Kühlraum 1 auch bei Druckschwankungen im Gehäuse 5 immer konstant ist, da er durch die Überströmkante 8 druckunabhängig definiert wird.

In Fig. 2 ist eine alternative Ausführungsform der Erfindung dargestellt, die im wesentlichen wie die Ausführungsform von Fig. 1, allerdings bezüglich einer vertikalen Längsmittelebene 20 symmetrisch aufgebaut ist, d.h., dass sich nicht nur an der linken Seite ein Auffangraum 9 befindet sondern auch an der rechten Seite. Auch alle übrigen Teile der Kühlvorrichtung, wie die Seitenwand 2 und der Ablauf 19, sind symmetrisch aufgebaut.

In Fig. 4 ist eine Seitenansicht der erfindungsgemäßen Kühlvorrichtung dargestellt. In dieser Ansicht sind auch die beiden Stirnwände 21 und 22, die den Kühlraum 1 in Förderrichtung gesehen nach hinten und vorne begrenzen, zu sehen. Nach der in Förderrichtung gesehen hinteren Stirnwand 22 kann noch ein weiterer Raum 23 angeordnet sein, der nicht mit Kühlwasser gefüllt ist, wodurch das gekühlte Kunststoffprofil trockener als im Stand der Technik üblich aus der Kühlvorrichtung austritt.

In Fig. 1, 2 und 3 ist unter der zentralen Öffnung 17 eine optional einsetzbare Trennwand 30 zu sehen, welche verhindert, dass das zugeführte Kühlwasser unter dem Profil durchströmt. Damit kann eine Strömung nach oben erzwungen werden. Außerdem kann durch Zu- oder Abschalten der Wasserzufuhr auf einer Seite ein unterschiedlich starkes Kühlen des Profiles auf beiden Seiten ermöglicht werden.

In den Fig. 1 und 2 ist des Weiteren ein Filter 31 zu sehen, der sich etwa in mittlerer Höhe des Auffangraumes 9 horizontal in diesem erstreckt. Verschmutzungen des Kühlwassers können daher außerhalb des Kühlraumes 1 abgefiltert werden, noch bevor das Kühlwasser durch die Abläufe 18 aus dem Auffangraum 9 abgezogen wird.

In Fig. 5 ist ein Montagerahmen 24 dargestellt, auf den die erfindungsgemäße Kühlvorrichtung montiert werden kann. Dieser Montagerahmen ist insbesondere dann vorteilhaft, wenn die Ableitungen für das Wasser aus den Auffangräumen 9 nicht wie bei den in den in Fig. 1 bis 4 dargestellten Ausführungsbeispielen an den Seitenwänden angeschlossen sind, sondern das Kühlwasser aus den Auffangräumen 9 durch den Boden 4 abgeleitet wird. Der Montagerahmen 24 weist dazu im wesentlichen zwei Längsstreben 25 und zwei stirnseitige Querstreben 26 auf. Zusätzlich sind noch zwei Verbindungsstreben 27 im Mittelbereich vorgesehen. An der Oberseite der Längsstreben 25 sind jeweils drei langlochartige Schlitze 28 angebracht, in welche Öffnungen im Boden 4 münden, die im Bereich der Auffangräume 9 angebracht sind. Durch die Öffnungen im Boden 4 sowie die langlochartigen Schlitze 28 strömt das Wasser in die hohl ausgeführten Längsstreben 25, die über die ebenfalls hohl ausgeführten Verbindungsstreben 27 miteinander verbunden sind. Abgesaugt wird das Kühlwasser schließlich über einen Stutzen 29, durch den Wasser z.B. von einem Zyklon abgesaugt wird.

Zusammenfassend kann ein Ausführungsbeispiel der Erfindung wie folgt dargestellt werden:

Eine Kühlvorrichtung für stranggepresste Kunststoffprofile weist einen Kühlraum 1 mit Kühlwasser auf, durch welches das zu kühlende Kunststoffprofil durchgeführt wird. Der Kühlraum 1 weist des weiteren wenigstens eine Zuleitung 10, 11 für das Kühlwasser im Boden 4 oder in einer Seitenwand 2, 3 auf. An wenigstens einer Seitenwand 2 ist eine Überströmkante 8 für das Kühlwasser angeordnet. Durch die Höhe der Überströmkante 8 kann die Höhe des Wasserspiegels 16 druckunabhängig eingestellt werden.

## Patentansprüche

1. Kühlvorrichtung für stranggepresste Kunststoffprofile mit einem Kühlraum (1)mit Kühlwasser, durch welches das zu kühlende Kunststoffprofil durchgeführt wird, wobei der Kühlraum (1) einen Boden (4), Stirnwände (21, 22) und Seitenwände (2, 3) sowie wenigstens eine Zuleitung (10, 11) für das Kühlwasser im Boden (4) oder in einer Seitenwand (2, 3) aufweist, **dadurch gekennzeichnet, dass** an wenigstens einer Seitenwand (2) eine Überströmkante (8) für das Kühlwasser angeordnet ist.

2. Kühlvorrichtung nach Anspruch 1, **dadurch gekennzeichnet, dass** die Höhe der Überströmkante (8) über dem Boden (4) verstellbar ist.

3. Kühlvorrichtung nach Anspruch 1 oder 2, **dadurch gekennzeichnet, dass** die Überströmkante (8) von der Oberkante der Seitenwand (2) gebildet wird.

4. Kühlvorrichtung nach einem der Ansprüche 1 bis 3, **dadurch gekennzeichnet, dass** die Höhe der Überströmkante (8) über dem Boden (4) über die gesamte Länge des Kühlraumes konstant ist.

5. Kühlvorrichtung nach einem der Ansprüche 1 bis 3, **dadurch gekennzeichnet, dass** die Überströmkante (8) von wenigstens einer Öffnung in der Seitenwand (2) gebildet wird.

6. Kühlvorrichtung nach Anspruch 5, **dadurch gekennzeichnet, dass** zwei oder mehr über die Länge des Kühlraumes (1) verteilte Öffnungen entlang der Seitenwand (2) angebracht sind und dass vorzugsweise die Höhe der Überströmkante (8) der Öffnungen über dem Boden (4) über die gesamte Länge des Kühlraumes (1) gleich ist.

7. Kühlvorrichtung nach einem der Ansprüche 1 bis 6, **dadurch gekennzeichnet, dass** zwei oder mehr Zuleitungen (10, 11) für das Kühlwasser über die Länge des Kühlraumes (1) verteilt sind.

8. Kühlvorrichtung nach einem der Ansprüche 1 bis 7, **dadurch gekennzeichnet, dass** im Kühlraum (1) wenigstens eine Stützblende (14) für das Kunststoffprofil angeordnet ist.

9. Kühlvorrichtung nach Anspruch 8, **dadurch gekennzeichnet, dass** die Stützblende (14) Durchbrechungen aufweist.

10. Kühlvorrichtung nach einem der Ansprüche 1 bis 9, **dadurch gekennzeichnet, dass** auf der vom Kühlraum (1) abgewandten Seite der Seitenwand (2) ein Auffangraum (9) mit wenigstens einem Ablauf (18) für überströmendes Kühlwasser angeordnet ist.

11. Kühlvorrichtung nach Anspruch 10, **dadurch gekennzeichnet, dass** der Ablauf (18) in einer Außenwand (8) des Auffangraumes (9) angeordnet ist.

12. Kühlvorrichtung nach einem der Ansprüche 1 bis 10, **dadurch gekennzeichnet, dass** der Ablauf (18) im Boden (4) des Auffangraumes (9) angeordnet ist.

13. Kühlvorrichtung nach einem der Ansprüche 1 bis 12, **gekennzeichnet durch** einen Montagerahmen (24) unter dem Boden (4), in den der wenigstens eine Ablauf mündet.

14. Kühlvorrichtung nach Anspruch 13, **dadurch gekennzeichnet, dass** in den Montagerahmen (24) zwei oder mehr Abläufe münden die zu einer gemeinsamen Ablaufleitung (29) führen.

15. Kühlvorrichtung nach einem der Ansprüche 1 bis 14, **dadurch gekennzeichnet, dass** an den oder die Abläufe (18) bzw. die Ablaufleitung (29) eine Saugpumpe angeschlossen ist.

16. Kühlvorrichtung nach einem der Ansprüche 1 bis 15, **dadurch gekennzeichnet, dass** sie ein den Kühlraum (1) und Auffangraum (9) umgebendes Gehäuse (5) aufweist, an das eine Vakuumpumpe angeschlossen ist.

17. Kühlvorrichtung nach einem der Ansprüche 1 bis 13, **dadurch gekennzeichnet, dass** sie bezüglich einer vertikalen Längsmittelebene (20) symmetrisch aufgebaut ist.

18. Kühlvorrichtung nach einem der Ansprüche 1 bis 17, **dadurch gekennzeichnet, dass** in Strömungsrichtung des Kühlwassers gesehen nach der Überströmkante (8) ein Filter (31) vorgesehen ist.

19. Kühlvorrichtung nach Anspruch 10 und 18, **dadurch gekennzeichnet, dass** der Filter (31) im Bereich des Auffangraumes (9) angeordnet ist.

20. Kühlvorrichtung nach Anspruch 19, **dadurch gekennzeichnet, dass** der Filter (31) etwa in mittlerer Höhe des Auffangraumes (9) angeordnet ist.
